# EUROPEAN PATENT SPECIFICATION

(11) **EP 0 314 623 B1**
(45) Date of publication and mention of the grant of the patent: **04.08.1993**
(21) Application number: 88810719.0
(22) Date of filing: 20.10.1988
(51) Int. Cl.: C07C 239/08, C07C 323/18, C08K 5/32, C08K 5/37

(54) **Substituted hydroxylamine ester stabilizers**
Substituierte veresterte Hydroxylamine und deren Verwendung als Stabilisatoren
Esters d'hydroxylamine substitués et emploi comme stabilisants

(30) Priority: 26.10.1987 US 114992
(43) Date of publication of application: 03.05.1989
(73) Proprietor: CIBA-GEIGY AG, 4002 Basel (CH)
(72) Inventor: Ravichadran, Ramanathan, Yonkers, NY 10703 (US); Pastor, Stephen D., CH-4053 Basle (CH)

(56) References cited:
- EP-A- 0 206 979
- US-A- 4 206 220
- US-A- 4 613 357

## Description

The present invention relates to novel hydroxylamine esters, to the use thereof as stabilizers for organic materials against oxidative, thermal and actinic degradation and to the stabilized organic materials.

Organic polymeric materials such as plastics and resins are subject to thermal, oxidative and photodegradation. A great variety of stabilizers are known in the art for stabilizing a diversity of substrates. Their effectiveness varies depending upon the causes of degradation and the substrate stabilized. For example, stabilizer effectiveness in reducing volatility may depend upon preventing bond scission in the substrate molecule. Limiting embrittlement and retaining elasticity in a polymer or rubber may require prevention of excessive crosslinking and/or chain scission. Prevention of discoloration may require inhibiting reactions which yield new chromophores or color bodies in the substrate or stabilizer. Problems of process stability and incompatibility must also be considered.

Various organic hydroxylamine compounds are generally known and some are commercially available. A number of patents disclose nitrogen-substituted hydroxylamines as antioxidant stabilizers for various substrates including polyolefins, polyesters and polyurethanes. US-A-3,432,578, US-A-3,644,278, US-A-3,778,464, US-A-3,408,422, US-A-3,926,909, US-A-4,316,996 and US-A-4,386,224 are representative of such patents which basically disclose N,N-dialkyl-, N,N-diaryl- and N,N-diaralkylhydroxylamine compounds and their color improvement and color stabilizing activity.

In addition, various O-acylated hydroxylamine derivatives have been disclosed. For example, US-A-3,184,500 and US-A-3,344,190 disclose O-acyloxyethylenehydroxylamines, these compounds being noted for their pharmacological utility.

US-A-3,869,278 discloses O-alkylcarbonylhydroxylamines, these compounds being noted as fruit abscission agents.

Furthermore, US-A-4,666,962 discloses substituted aminoxy propionates as stabilizers for various organic materials. US-A-4,613,357 discloses N,N-disubstituted hydroxylamine esters of substituted pyridyloxyphenoxypropanoic acids and herbicidal methods of use.

Y.A. Beltagy et al., Pharmazie 33, 711 (1978) describe the preparation of esters of N¹-methyl-N⁴-hydroxypiperazine and N,N-dibenzylhydroxylamine with potential local anesthetic activity. S. Oae et al., Bull. Chem. Soc. Jpn. 49, 730 (1976) describe the synthesis and reactions of O-aroyl-N,N-bis(p-substituted benzyl)hydroxylamine with various nucleophiles in dipolar aprotic solvents. A.H. Beckett et al., Tet. 29, 4189 (1973) and A.J. Biloski et al., Synthesis Comm. 7, 537 (1983) describe the acylated dibenzylhydroxylamines as precursors for the dibenzylhydroxylamines. K. Torssell et al., Acta. Chem. Scand. B, 32 118 (1978) describe O-benzoyl-N,N-dialkylhydroxylamines. H. Möhrle et al., describe various acetylated dinaphthylhydroxylamines in Chem. Ber. 109, 1106 (1976). L. Horner et al., Ann. 606, 47 (1957) describe the preparation of EtN(OAc)Ph. O-Benzoyl-N-(β-naphthyl)hydroxylamine and its use as an antioxidant in rubber is described in SU-A-115,827 (Chemical Abstracts 53: 15034d).

The instant invention pertains to compounds of the formula I 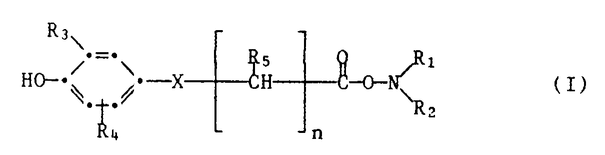
wherein n is an integer from 0 to 2, X is a direct bond, -S- or -CH₂S-, R₁ and R₂ independently are hydrogen, alkyl of 1 to 36 carbon atoms, cycloalkyl of 5 to 12 carbon atoms, allyl, aryl, aralkyl of 7 to 9 carbon atoms, said aralkyl substituted by alkyl of 1 to 36 carbon atoms, or R₁ and R₂ together with the nitrogen atom to which they are linked form a 5 - 7 membered heterocyclic ring, R₃ and R₄ independently are alkyl of 1 to 18 carbon atoms, cycloalkyl of 5 to 6 carbon atoms, phenyl, alkaryl of 7 to 18 carbon atoms or aralkyl of 7 to 9 carbon atoms, and R₅ is hydrogen or the group

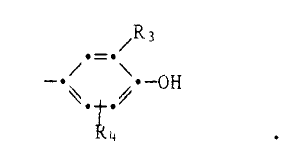

The compounds of the formula I serve to protect various substrates such as e.g. polyolefins, elastomers and lubricating oils against the adverse effects of oxidative and thermal degradation. They are most effective as color improvers and process stabilizers in polyolefin compositions which may contain metal salts of fatty acids and which also contain a phenolic antioxidant.

Examples of R₁ and R₂ as alkyl of 1 to 36 carbon atoms are methyl, ethyl, butyl, 2-ethylhexyl, octyl, decyl, dodecyl and octadecyl. Straight-chain or branched alkyl of 1 to 18 carbon atoms is preferred.

Examples of R₁ and R₂ as cycloalkyl of 5 to 12 carbon atoms are cyclopentyl, cyclohexyl, cyclooctyl and cyclododecyl. Cycloalkyl of 5 to 8 carbon atoms, in particular cyclopentyl and cyclohexyl, are preferred.

R₁ and R₂ as aryl are preferably phenyl or naphthyl.

Examples of R₁, R₂, R₃ and R₄ as aralkyl of 7 to 9 carbon atoms are benzyl, alpha-methylbenzyl and alpha, alpha-dimethylbenzyl. For R₁ and R₂ said aralkyl may be substituted on the phenyl by alkyl of 1 to 36 carbon atoms, preferably 1 to 10 carbon atoms.

When R₁ and R₂ together with the nitrogen atom to which they are linked form a 5 - 7 membered heterocyclic ring, said heterocyclic group is for example piperidino, substituted piperidino, morpholino, pyrrolidinyl, pyrrolinyl, N-methylpiperazinyl, pyrazolidinyl or the like.

R₃ and R₄ as alkyl of 1 to 18 carbon atoms have for example one of the meanings given above for R₁ and R₂ as alkyl. Alkyl of 1 to 8 carbon atoms, in particular tert-alkyl of 4 to 8 carbon atoms, is preferred. Especially preferred meanings of R₃ and R₄ are tert-butyl, tert-amyl and tert-octyl, in particular tert-butyl.

R₃ and R₄ as cycloalkyl of 5 to 6 carbon atoms are in particular cyclopentyl and cyclohexyl.

Preferred examples of R₃ and R₄ as alkaryl of 7 to 18 carbon atoms are tolyl, xylyl and the like.

R₁ and R₂ as benzyl or the alkyl mixture found in hydrogenated tallow amine are especially preferred.

A typical di(hydrogenated tallow)amine has the following distribution of alkyl substituents:

| T₁T₂NH | | |
|---|---|---|
| T₁ | T₂ | % |
| C₁₆ | C₁₄ | 1.9 |
| C₁₆ | C₁₆ | 12.4 |
| C₁₆ | C₁₇ | 2.8 |
| C₁₆ | C₁₈ | 36.0 |
| C₁₇ | C₁₈ | 3.9 |
| C₁₈ | C₁₈ | 39.0 |
| other | | 4.0 |

It is clear that the di(hydrogenated tallow)amine originating from animal sources may well vary somewhat in the specific distribution of alkyl substituents, but the di(hydrogenated tallow)amine contains major amounts of N,N-dihexadecylamine, N,N-dioctadecylamine and N-hexadecyl-N-octadecylamine. The individual components of the mixture can be separated by distillation under high vacuum.

R₃ and R₄ are both preferably positioned ortho to the hydroxy group.

X is preferably a direct bond or -CH₂S-.

Those compounds of the formula I are of interest, wherein R₁ and R₂ are independently hydrogen, straight-chain or branched alkyl of 1 to 18 carbon atoms, cyclopentyl, cyclohexyl, benzyl, alpha-methylbenzyl or alpha,alpha-dimethylbenzyl.

Preferred examples of compounds of the formula I are
O-(3,5-di-tert-butyl-4-hydroxybenzoyl)-N,N-dibenzylhydroxylamine,
O-[bis(3,5-di-tert-butyl-4-hydroxyphenyl)acetyl]-N,N-dibenzylhydroxylamine,
O-(3,5-di-tert-butyl-4-hydroxyhydrocinnamoyl)-N,N-dibenzylhydroxylamine,
O-[3-(3,5-di-tert-butyl-4-hydroxybenzylthio)propionyl]-N,N-dibenzylhydroxylamine and
O-(3,5-di-tert-butyl-4-hydroxybenzyl)-N,N-diethylhydroxylamine.

Also preferred compounds of the formula I are the O-esters of HON[(CH₂)ₘCH₃]₂ where m is 15 - 17 with 3,5-di-tert-butyl-4-hydroxybenzoic acid.

The derivatives of this invention can be prepared by analogy to known methods, for example by reacting the appropriately substituted (hydroxyphenyl) benzoic, acetic or propanoic acid with a chloride such as e.g. oxalyl or thionyl chloride to prepare the corresponding acid chloride and then reacting the acid chloride with the appropriately substituted hydroxylamine in the presence of an acid acceptor, preferably triethylamine.

The starting materials needed to prepare the stabilizers of the invention are items of commerce or can be prepared by known methods.

A further embodiment of the present invention is a composition comprising an organic material, preferably a plastic, polymer or resin, subject to oxidative, thermal and actinic degradation and at least one compound of the formula I.

Substrates in which the compounds of the formula I are particularly useful are polyolefins such as polyethylene and polypropylene, polystyrene, including impact polystyrene, ABS resin, SBR, isoprene, as well as natural rubber, polyesters including polyethylene terephthalate and polybutylene terephthalate, including copolymers, and lubricating oils such as those derived from mineral oil.

In general polymers which can be stabilized include
1. Polymers of monoolefins and diolefins, for example polypropylene, polyisobutylene, polybutene-1, polymethylpentene-1, polyisoprene or polybutadiene, as well as polymers of cycloolefins, for instance of cyclopentene or norbornene, polyethylene (which optioanlly can be crosslinked), for example high density polyethylene (HDPE), low density polyethylene (LDPE) and linear low density polyethylene (LLDPE).
2. Mixture of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefines and diolofines with each other or with other vinyl monomers, such as, for example, ethylene/propylene, linear low density polyethylene (LLDPE) and its mixtures with low density polyethylene (LDPE), propylene/butene-1, ethylene/hexene, ethylene/ethylpentene, ethylene/heptene, ethylene/octene, propylene/isobutylene, ethylene/butene-1, propylene/butadiene, isobutylene/isoprene, ethylene/alkyl acrylates, ethylene/alkyl methacrylates, ethylene/vinyl acetate or ethylene/ acrylic acid copolymers and their salts (ionomers) and terpolymers of ethylene with propylene and a diene, such as hexadiene, dicyclopentadiene or ethylidene-norbornene; as well as mixtures of such copolymers and their mixtures with polymers mentioned in 1) above, for example polypropylene/ethylene-propylene-copolymers, LDPE/EVA, LDPE/EAA, LLDPE/EVA and LLDPE/EAA.
3a. Hydrocarbon resins (for example C₅-C₉) and hydrogenated modifications thereof (for example tackyfiers).
4. Polystyrene, poly-(p-methylstyrene), poly-(α-methylstyrene).
5. Copolymers of styrene or α-methylstyrene with dienes or acrylic derivatives, such as, for example, styrene/butadiene, styrene/ acrylonitrile, styrene/alkyl methacrylate, styrene/maleic anhydride, styrene/butadiene/ethyl acrylate, styrene/acrylonitrile/methyl acrylate; mixtures of high impact strength from styrene copolymers and another polymer, such as, for example, from a polyacrylate, a diene polymer or an ethylene/propylene/diene terpolymer; and block copolymers of styrene, such as, for example, styrene/butadiene/ styrene, styrene/ isoprene/styrene, styrene/ethylene/butylene/ styrene or styrene/ ethylene/propylene/styrene.
6. Graft copolymers of styrene or α-methylstyrene such as, for example, styrene on polybutadiene, styrene on polybutadiene-styrene or polybutadiene-acrylonitrile; styrene and acrylonitrile (or methacrylonitrile) on polybutadiene; styrene and maleic anhydride or maleimide on polybutadiene; styrene, acrylonitrile and maleic anhydride or maleimide on polybutadiene; styrene, acrylonitrile and methyl methacrylate on polybutadiene, styrene and alkyl acrylates or methacrylates on polybutadiene, styrene and acrylonitrile on ethylene/propylene/diene terpolymers, styrene and acrylonitrile on polyacrylates or polymethacrylates, styrene and acrylonitrile on acrylate/butadiene copolymers, as well as mixtures thereof with the copolymers listed under 5), for instance the copolymer mixtures known as ABS-, MBS-, ASA- or AES-polymers.
7. Halogen-containing polymers, such as polychloroprene, chlorinated rubbers, chlorinated or sulfochlorinated polyethylene, epichlorohydrin homo- and copolymers, polymers from halogen-containing vinyl compounds,as for example, polyvinylchloride, polyvinylidene chloride, polyvinyl fluoride, polyvinylidene fluoride, as well as copolymers thereof, as for example, vinyl chloride/vinylidene chloride, vinyl chloride/vinyl acetate or vinylidene chloride/vinyl acetate copolymers.
8. Polymers which are derived from α,β-unsaturated acids and derivatives thereof, such as polyacrylates and polymethacrylates, polyacrylamide and polyacrylonitrile.
9. Copolymers from the monomers mentioned under 8) with each other or with other unsaturated monomers, such as, for instance, acrylonitrile/butadiene, acrylonitrile/alkyl acrylate, acrylonitrile/ alkoxyalkyl acrylate or acrylonitrile/vinyl halogenide copolymers or acrylonitrile/alkyl methacrylate/butadiene terpolymers.
10. Polymers which are derived from unsaturated alcohols and amines, or acyl derivatives thereof or acetals thereof, such as polyvinyl alcohol, polyvinyl acetate, polyvinyl stearate, polyvinyl benzoate, polyvinyl maleate, polyvinyl butyral, polyallyl phthalate or polyallylmelamine; as well as their copolymers with olefins mentioned in 1) above.
11. Homopolymers and copolymers of cyclic ethers, such as polyalkylene glycols, polyethylene oxide, polypropylene oxide or copolymers thereof with bis-glycidyl ethers.
12. Polyacetals, such as polyoxymethylene and those polyoxymethylenes which contain ethylene oxide as a comonomer; polyacetals modified with thermoplastic polyurethanes, acrylates or MBS.
13. Polyphenylene oxides and sulfides, and mixtures of polyphenylene oxides with polystyrene or polyamides.
14. Polyurethanes which are derived from polyethers, polyesters or polybutadienes with terminal hydroxyl groups on the one side and aliphatic or aromatic polyisocyanates on the other side, as well as precursors thereof (polyisocyanates, polyols or prepolymers).
15. Polyamides and copolyamides which are derived from diamines and dicarboxylic acids and/or from aminocarboxylic acids or the corresponding lactams, such as polyamide 4, polyamide 6, polyamide 6/6, 6/10, 6/9, 6/12 and 4/6, polyamide 11, polyamide 12, aromatic polyamides obtained by condensation of m-xylene diamine and adipic acid; polyamides prepared from hexamethylenediamine and isophthalic or/and terephthalic acid and optionally an elastomer as modifier, for example poly-2,4,4,-trimethylhexamethylene terephthalamide or poly-m-phenylene isophthalamide. Further copolymers of the aforementioned polyamides with polyolefins, olefin copolymers, ionomers or chemically bonded or grafted elastomers; or with polyethers, such as for instance, with polyethylene glycols, polypropylene glycols or polytetramethylene glycols. Polyamides or copolyamides modified with EPDM or ABS. Polyamides condensed during processing (RIM-polyamide systems).
16. Polyureas, polyimides and polyamide-imides.
17. Polyesters which are derived from dicarboxylic acids and diols and/or from hydroxycarboxylic acids or the corresponding lactones, such as polyethylene terephthalate, polybutylene terephthalate, poly-1,4-di-methylolcyclohexane terephthalate, poly-[2,2,-(4-hydroxyphenyl)-propane] terephthalate and polyhydroxybenzoates as well as block-copolyether-esters derived from polyethers having hydroxyl end groups.
18. Polycarbonates and polyester-carbonates.
19. Polysulfones, polyether-sulfones and polyether-ketones.
20. Crosslinked polymers which are derived from aldehydes on the one hand and phenols, ureas and melamines on the other hand, such as phenol/formaldehyde resins, urea/formaldehyde resins and melamine/ formaldehyde resins.
21. Drying and non-drying alkyd resins.
22. Unsaturated polyester resins which are derived from copolyesters of saturated and unsaturated dicarboxylic acids with polyhydric alcohols and vinyl compounds as crosslinking agents, and also halogen-containing modifications thereof of low inflammability.
23. Thermosetting acrylic resins, derived from substituted acrylic esters, such as epoxy-acrylates, urethane-acrylates or polyester-acrylates.
24. Alkyd resins, polyester resins or acrylate resins in admixture with melamine resins, urea resins, polyisocyanates or epoxide resins as crosslinking agents.
25. Crosslinked epoxide resins which are derived from polyepoxides, for example from bis-glycidyl ethers or from cycloaliphatic diepoxides.
26. Natural polymers, such as cellulose, rubber, gelatine and derivatives thereof which are chemically modified in a polymer-homologous manner, such as cellulose acetates, cellulose propionates and cellulose butyrates, or the cellulose ethers, such as methylcellulose; rosins and their derivatives.
27. Mixtures of polymers as mentioned above, for example PP/EPDM, Polyamide 6/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPE/HIPS, PPE/PA 6.6 and copolymers, PA/HDPE, PA/PP, PA/PPE.
28. Naturally occurring and synthetic organic materials which are pure monomeric compounds or mixtures of such compounds, for example mineral oils, animals and vegetable fats, oil and waxes, or oils, fats and waxes based on synthetic esters (e.g. phthalates, adipates, phosphates or trimellithates) and also mixtures of synthetic esters with mineral oils in any weight ratios, which materials may be used as plasticizer for polymers or as textile spinning oils, as well as aqueous emulsions of such materials.
29. Aqueous emulsions of natural or synthetic rubber, e.g. natural latex or latices of carboxylated styrene/butadiene copolymers.

The compounds of the formula I are especially effective in stabilizing synthetic polymers, in particular polyolefin homopolymers or copolymers.

In general, the compounds of the present invention are employed in from about 0.01 to about 5 % by weight of the stabilized composition, although this will vary with the particular substrate and application. An advantageous range is from about 0.05 to about 2 %, and especially 0.1 to about 1 %.

The stabilizers of the instant invention may readily be incorporated into the organic polymers by conventional techniques, at any convenient stage prior to the manufacture of shaped articles therefrom. For example, the stabilizer may be mixed with the polymer in dry powder form, or a suspension or emulsion of the stabilizer may be mixed with a solution, suspension, or emulsion of the polymer. The resulting stabilized polymer compositions of the invention may optionally also contain various conventional additives, such as the following:

### 1. Antioxidants

1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, 2,6-di-nonyl-4-methylphenol.
1.2. Alkylated hydroquinones,for example 2,6-di-tert-butyl-4-methoxyphenol, 2,5-di-tert-butylhydroquinone, 2,5-di-tert-amylhydroquinone, 2,6-diphenyl-4-octadecyloxyphenol.
1.3. Hydroxylated thiodiphenyl ethers, for example 2,2′-thiobis(6-tert-butyl-4-methylphenol), 2,2′-thiobis(4-octylphenol), 4,4′-thiobis(6-tert-butyl-3-methylphenol), 4,4′-thiobis(6-tert-butyl-2-methylphenol).
1.4. Alkylidenebisphenols, for example 2,2′-methylenebis(6-tert-butyl-4-methylphenol), 2,2′-methylenebis(6-tert-butyl-4-ethylphenol), 2,2′-methylenebis[4-methyl-6-(α-methylcyclohexyl)phenol], 2,2′-methylenebis(4- methyl-6-cyclohexylphenol), 2,2′-methylenebis(6-nonyl-4-methylphenol), 2,2′-methylenebis(4,6-di-tert-butylphenol), 2,2′-ethylidenebis(4,6-di-tert-butylphenol), 2,2′-ethylidenebis(6-tert-butyl-4-isobutylphenol), 2,2′-methylenebis[6-(α-methylbenzyl)-4-nonylphenol], 2,2′-methylenebis[6-(α,α-dimethylbenzyl)-4-nonylphenol], 4,4′-methylenebis(2,6-di-tert-butylphenol), 4,4′-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis[3,3-bis(3′-tert-butyl-4′-hydroxyphenyl)butyrate], bis(3-tert-butyl-4-hydroxy-5-methylphenyl)dicyclopentadiene, bis[2-(3′-tert-butyl-2′-hydroxy-5′-methylbenzyl)-6-tert-butyl-4methylphenyl] terephthalate.
1.5. Benzyl compounds, for example 1,3,5-tris(3,5-di-tert-butyl-4-hydroxybenzyl)-2,4,6-trimethylbenzene, bis(3,5-di-tert-butyl-4-hydroxybenzyl) sulfide, isooctyl 3,5-tri-tert-butyl-4-hydroxybenzylmercaptoacetate, bis(4-tert-butyl-3-hydroxy-2,6-dimethylbenzyl) diethiolterephthalate, 1,3,5-tris(3,5-di-tert-butyl-4-hydroxybenzyl) isocyanurate, 1,3,5-tris(4-tert-butyl-3-hydroxy-2,6-dimethylbenzyl) isocyanurate, dioctadecyl 3,5-di-tert-butyl-4-hydroxybenzylphosphonate, calcium salt of monoethyl 3,5-di-tert-butyl-4-hydroxybenzylphosphonate, 1,3,5-tris-(3,5-dicyclohexyl-4-hydroxybenzyl)isocyanurate.
1.6. Acylaminophenols, for example lauric acid 4-hydroxyanilide, stearic acid 4-hydroxyanilide, 2,4-bis(octylmercapto)-6-(3,5-di-tert-butyl-4-hydroxyanilino)-s-triazine, octyl N-(3,5-di-tert-butyl-4-hydroxyphenyl)carbamate.
1.7. Esters of β-(3,5-di-tert-butyl-4-hydroxyphenyl)propionic acid with mono- or polyhydric alcohols, e.g. with methanol, diethylene glycol, octadecanol, triethylene glycol, 1,6-hexanediol, pentaerythritol, neopentyl glycol, tris(hydroxyethyl) isocyanurate, thiodiethylene glycol, N,N′-bis(hydroxyethyl)oxalic acid diamide.
1.8. Esters of β-(5-tert-butyl-4-hydroxy-3-methylphenyl)propionic acid with mono- or polyhydric alcohols, e.g. with methanol, diethylene glycol, octadecanol, triethylene glycol, 1,6-hexanediol, pentaerythritol, neopentyl glycol, tris(hydroxyethyl)isocyanurate, thiodiethylene glycol, N,N′-bis(hydroxyethyl)oxalic acid diamide.
1.9. Esters of β-(3,5-dicyclohexyl-4-hydroxyphenyl)propionic acid with mono- or polyhydric alcohols, e.g. with methanol, diethylene glycol, octadecanol, triethylene glycol, 1,6-hexanediol, pentaerythritol, neopentyl glycol, tris(hydroxyethyl)isocyanurate, thiodiethylene glycol, N,N′-bis(hydroxyethyl)oxalic acid diamide.
1.10. Amides of β-(3,5-di-tert-butyl-4-hydroxyphenyl)propionic acid e.g. N,N′-bis(3,5-di-tert-butyl-4-hydroxyphenylpropionyl)hexamethylene-diamine, N,N′-bis(3,5-di-tert-butyl-4-hydroxyphenylpropionyl)trimethylene-diamine, N,N′-bis(3,5-di-tert-butyl-4-hydroxyphenylpropionyl)hydrazine.

### 2. UV absorbers and light stabilizers

2.1. 2-(2′-Hydroxyphenyl)benzotriazoles, for example the 5′-methyl, 3′,5′-di-tert-butyl, 5′-tert-butyl, 5′-(1,1,3,3-tetramethylbutyl), 5-chloro-3′,5′-di-tert-butyl, 5-chloro-3′-tert-butyl-5′-methyl, 3′-secbutyl-5′-tert-butyl, 4′-octoxy, 3′,5′-di-tert-amyl and 3′,5′-bis(α,α-dimethylbenzyl)derivatives.
2.2. 2-Hydroxybenzophenones, for example the 4-hydroxy, 4-methoxy, 4-octoxy, 4-decyloxy, 4-dodecyloxy, 4-benzyloxy, 4,2′,4′-trihydroxy and 2′-hydroxy-4,4′-dimethoxy derivatives.
2.3. Esters of substituted and unsubstituted benzoic acids, for example, 4-tert-butylphenyl salicylate, phenyl salicylate, octylphenyl salicylate, dibenzoylresorcinol, bis(4-tert-butylbenzoyl)-resorcinol, benzoylresorcinol, 2,4-di-tert-butylphenyl 3,5-di-tert-butyl-4-hydroxybenzoate and hexadecyl 3,5-di-tert-butyl-4-hydroxybenzoate.
2.4. Acrylates, for example ethyl α-cyano-β,β-diphenylacrylate, isooctyl α-cyano-β,β-diphenylacrylate, methyl α-carbomethoxycinnamate, methyl α-cyano-β-methyl-p-methoxy-cinnamate, butyl α-cyano-β-methyl-p-methoxycinnamate, methyl α-carbomethoxy-p-methoxycinnamate and N-(β-carbomethoxy-β-cyanovinyl)-2-methylindoline.
2.5. Nickel compounds, for example nickel complexes of 2,2′-thio-bis-[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of 4-hydroxy-3,5-di-tert-butylbenzyl-phosphonic acid monoalkyl esters, e.g. of the methyl or ethyl ester, nickel complexes of ketoximes, e.g. of 2-hydroxy-4-methyl-phenyl undecyl ketoxime, nickel complexes of 1-phenyl-4-lauroyl-5-hydroxypyrazole, with or without additional ligands.
2.6. Sterically hindered amines, for example bis(2,2,6,6-tetramethylpiperidyl) sebacate, bis(1,2,2,6,6-pentamethylpiperidyl) sebacate, bis(1,2,2,6,6-pentamethylpiperidyl) n-butyl-3,5-di-tert-butyl-4-hydroxybenzylmalonate, the condensation product of 1-(2-hydroxyethyl)-2,2,6,6-tetramethyl-4-hydroxypiperidine and succinic acid, the condensation product of N,N′-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl) nitrilotriacetate, tetrakis(2,2,6,6-tetramethyl-4-piperidyl)-1,2,3,4-butane-tetracarboxylate, 1,1′-(1,2-ethanediyl)bis(3,3,5,5-tetramethylpiperazinone).
2.7. Oxalic acid diamides, for example 4,4′-dioctyloxyoxanilide, 2,2′-di-octyloxy-5,5′-di-tert-butyloxanilide, 2,2′-didodecyloxy-5,5′-di-tert-butyloxanilide, 2-ethoxy-2′-ethyloxanilide, N,N′-bis(3-dimethylaminopropyl)oxalamide, 2-ethoxy-5-tert-butyl-2′-ethyloxanilide and its mixture with 2-ethoxy-2′-ethyl-5,4′-di-tert-butyloxanilide and mixtures of ortho- and para-methoxy-disubstituted oxanilides and mixtures of o- and p-ethoxy-disubstituted oxanilides.
3. Metal deactivators, for example N,N′-diphenyloxalic acid diamide, N-salicylal-N′-salicyloylhydrazine, N,N′-bis(salicyloyl)hydrazine, N,N′-bis(3,5-di-tert-butyl-4-hydroxyphenylpropionyl)hydrazine, 3-salicyloylamino-1,2,4-triazole, bis(benzylidene)oxalodihydrazide.
4. Phosphites and phosphonites, for example triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tertbutylphenyl) pentaerythritol diphosphite, tristearyl sorbitol triphosphite, tetrakis-(2,4-di-tert-butylphenyl) 4,4′-biphenylene diphosphonite, 3,9-bis(2,4-di-tert-butylphenoxy)-2,4,8,10-tetraoxa-3,9-diphosphaspiro[5.5]undecane.
5. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.
6. Polyamide stabilisers, for example, copper salts in combination with iodides and/or phosphorus compounds and salts of divalent manganese.
7. Basic co-stabilisers, for example, melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids for example Ca stearate, Zn stearate, Mg stearate, Na ricinoleate and K palmitate, antimony pyrocatecholate or zinc pyrocatecholate.
8. Nucleating agents, for example, 4-tert.butyl-benzoic acid, adipic acid, diphenylacetic acid.
9. Fillers and reinforcing agents, for example, calcium carbonate, silicates, glass fibres, asbestos, talc, kaolin, mica, barium sulfate, metal oxides and hydroxydes, carbon black, graphite.
10. Other additives, for example, plasticisers, lubricants, emulsifiers, pigments, optical brighteners, flameproofing agents, antistatic agents and blowing agents.

While the compounds of the formula I can be beneficially used as stabilizers for a variety of substrates, particularly the polyolefins, both alone and in conjunction with other coadditives, the introduction of the instant esters into the organic materials, optionally containing various alkali metal, alkaline earth metal and aluminum salts of higher fatty acids (see Additive #7 hereinabove), with hindered phenolic antioxidants results in enhanced and particularly salubrious protection to such substrates in terms of reducing color formation stemming from the presence of the phenols. Such phenolic antioxidants include e.g. n-octadecyl 3,5-di-tert-butyl-4-hydroxyhydrocinnamate, neopentanetetrayl tetrakis(3,5-di-tert-butyl-4-hydroxyhydrocinnamate), di-n-octadecyl 3,5-di-tert-butyl-4-hydroxybenzylphosphonate, 1,3,5-tris(3,5-di-tert-butyl-4-hydroxybenzyl)isocyanurate, thiodiethylene bis(3,5-di-tert-butyl-4-hydroxyhydrocinnamate), 1,3,5-trimethyl-2,4,6-tris(3,5-di-tert-butyl-4-hydroxybenzyl)benzene, 3,6-dioxaoctamethylene bis(3-methyl-5-tert-butyl-4-hydroxyhydrocinnamate), 2,6-di-tert-butyl-p-cresol, 2,2′-ethylidene-bis(4,6-di-tert-butylphenol), 1,3,5-tris(2,6-dimethyl-4-tert-butyl-3-hydroxybenzyl)isocyanurate, 1,1,3-tris(2-methyl-4-hydroxy-5-tert-butylphenyl)butane, 1,3,5-tris[2-(3,5-di-tert-butyl-4-hydroxyhydrocinnamoyloxy)ethyl]isocyanurate, 3,5-bis(3,5-di-tert-butyl-4-hydroxybenzyl)mesitol, hexamethylene bis(3,5-di-tert-butyl-4-hydroxyhydrocinnamate), 1-(3,5-di-tert-butyl-4-hydroxyanilino)-3,5-bis(octylthio)-s-triazine, N,N′-hexamethylene-bis(3,5-di-tert-butyl-4-hydroxyhydrocinnamamide), calcium bis(ethyl 3,5-di-tert-butyl-4-hydroxybenzylphosphonate), ethylene bis[3,3-bis(3-tert-butyl-4-hydroxyphenyl)butyrate], octyl 3,5-di-tert-butyl-4-hydroxybenzylmercaptoacetate, bis(3,5-di-tert-butyl-4-hydroxyhydrocinnamoyl)hydrazide, and N,N′-bis[2-(3,5-di-tert-butyl-4-hydroxyhydrocinnamoyloxy)ethyl]oxamide. Neopentanetetrayl tetrakis(3,5-di-tert-butyl-4-hydroxyhydrocinnamate), n-octadecyl 3,5-di-tert-butyl-4-hydroxyhydrocinnamate, 1,3,5-trimethyl-2,4,6-tris(3,5-di-tert-butyl-4-hydroxybenzyl)benzene, 1,3,5-tris(3,5-di-tert-butyl-4-hydroxybenzyl)isocyanurate, 2,6-di-tert-butyl-p-cresol and 2,2′-ethylidene-bis(4,6-di-tert-butylphenol) are preferred phenolic antioxidants.

Likewise, the compounds of the formula I also prevent color formation when hindered amine light stabilizers are present; such hindered amines include bis(1,2,2,6,6-pentamethyl-4-piperidyl)-2-n-butyl-2-(3,5-di-tert-butyl-4-hydroxybenzyl)malonate, bis(2,2,6,6-tetramethyl-4-piperidyl)sebacate, dimethylsuccinate polymer with 4-hydroxy-2,2,6,6-tetramethyl-1-piperidinethanol, and polymer of 2,4-dichloro-6-octylamino-s-triazine with N,N′-bis(2,2,6,6-tetramethyl-4-piperidyl)hexamethylenediamine.

The following examples illustrate the embodiments of this invention. In these examples, all parts given are by weight unless otherwise noted.

### Example 1: Preparation of O-(3,5-di-tert-butyl-4-hydroxybenzoyl)-N,N-dibenzylhydroxylamine

To a solution of 27.9 g of dibenzylhydroxylamine and 10.3 g of pyridine in 100 ml of methylene chloride is added a solution of 39.0 g of 3,5-di-tert-butyl-4-hydroxybenzoyl chloride in 100 ml of methylene chloride. After stirring the mixture at room temperature for 24 hours, the reaction mixture is washed with 10 % aqueous hydrochloric acid, water, brine and dried. Evaporation followed by crystallization of the residue from heptane affords the title compound as a white solid with a melting point of 90 - 92°C.

| | | | |
|---|---|---|---|
| Anal. Calcd. for C₂₉H₃₅NO₃: | C, 78.2; | H, 7.9; | N, 3.1. |
| Found: | C, 78.8; | H, 8.0; | N, 3.2. |

### Example 2: Preparation of 0-[bis(3,5-di-tert-butyl-4-hydroxyphenyl)acetyl]-N,N-dibenzylhydroxylamine

### Preparation of the acid chloride:

To a solution of 3.17 g (25 mmol) of oxalyl chloride in 100 ml of dichloromethane is added portionwise 11.72 g (25 mmol) of 2,2-bis(3,5-di-tert-butyl-4-hydroxyphenyl) acetic acid. The formation of acid chloride is determined to be complete when the IR spectrum of the reaction mixture shows the disappearance of the carboxyl absorption at 1710 cm⁻¹ corresponding to the free acid. The acid chloride is isolated as a white solid with a melting point of 148 - 151°C.

| | | |
|---|---|---|
| Anal. Calcd. for C₃₀H₄₃Cl0₃: | C, 74.0; | H, 8.9. |
| Found: | C, 73.8; | H, 9.0. |

### Preparation of the ester:

To a solution of 5.33 g (25 mmol) of N,N-dibenzylhydroxylamine and 2.53 g (25 mmol) of triethylamine in 100 ml of dichloromethane cooled with an ice-water bath is added dropwise the above dichloromethane solution of acid chloride. The reaction mixture is stirred at room temperature until the formation of ester is complete. The reaction mixture is extracted three times with a saturated solution of sodium chloride and the organic phase is dried over anhydrous sodium sulfate. The solvent is removed in vacuo and the residue is recrystallized from petroleum ether to give 12.50 g (75 %) of a white solid with a melting point of 141.5 - 142.5°C.

| | | | |
|---|---|---|---|
| Anal. Calcd. for C₄₄H₅₇NO₄: | C, 79.6; | H, 8.7; | N, 2.1. |
| Found: | C, 79.6; | H, 8.7; | N, 2.0. |

### Example 3: Preparation of O-(3,5-di-tert-butyl-4-hydroxyhydrocinnamoyl)-N,N-dibenzylhydroxylamine

The procedure of Example 2 is followed using 3.17 g (25 mmol) of oxalyl chloride, 6.96 g (25 mmol) of 3-(3,5-di-tert-butyl-4-hydroxyphenyl)propanoic acid, 5.33 g (25 mmol) of N,N-dibenzylhydroxylamine, and 2.53 g (25 mmol) of triethylamine. The residue is recrystallized from petroleum ether to give 9.06 g (77 %) of a white solid with a melting point of 93 - 95.5°C.

### Example 4: Preparation of O-(3,5-di-tert-butyl-4-hydroxybenzylthio)propionyl-N,N-dibenzylhydroxylamine

The compound is prepared using the method of Example 2, with 16.20 g of 3-(3,5-di-tert-butyl-4-hydroxybenzylthio)propanoic acid, 10.66 g of N,N-dibenzylhydroxylamine, 5.06 g of triethylamine, and 6.35 g of oxalyl chloride. The residue is purified by preparative HPLC to give 3.0 g of a white solid with a melting point of 84 - 86°C.

| | | | |
|---|---|---|---|
| Anal. Calcd. for C₃₂H₄₁NO₃S: | C, 74.0; | H, 8.0; | N, 2.7. |
| Found: | C, 73.8; | H, 8.0; | N, 2.6. |

### Example 5: Preparation of O-(3,5-di-tert-butyl-4-hydroxybenzoyl)-N,N-diethylhydroxylamine

Following the procedure of Example 2, the compound is prepared from 3.17 g of oxalyl chloride, 6.25 g of 3,5-di-tert-butyl-4-hydroxybenzoic acid, 2.53 g of N,N-diethylhydroxylamine, and 2.53 g of triethylamine. The residue is recrystallized from petroleum ether to give 3.47 g of a white solid with a melting point of 129 - 137°C.

| | | | |
|---|---|---|---|
| Anal. Calcd. for C₁₉H₃₁NO₃: | C, 71.0; | H, 9.7; | N, 4.4. |
| Found: | C, 71.0; | H, 10.0; | N, 4.4. |

### Example 6: Preparation of 3,5-di-tert-butyl-4-hydroxybenzoic acid O-ester of HON[(CH₂)ₘCH₃]₂ where m = 15 - 17

Following the procedure of Example 2, the compounds are prepared from 12.50 g of 3,5-di-tert-butyl-4-hydroxybenzoic acid, 6.35 g of oxalyl chloride, 5.06 g of triethylamine, and 26.90 g of HON[(CH₂)ₘCH₃]₂ where m = 15 - 17. The IR spectrum of the product has an absorption at 1730 cm⁻¹ which is assigned to the carbonyl group of the ester.

### Example 7: Light stabilization of polypropylene

Unstabilized polypropylene powder (®Himont Profax 6501) is thoroughly blended with the indicated amount of additive. The blended materials are then milled on a two-roll mill at 182°C for 5 minutes, after which time the stabilized polypropylene is sheeted from the mill and allowed to cool. The milled polypropylene is then cut into pieces and compression molded on a hydraulic press at 250°C and 1.2 x 10⁶Pa into 0.625 mm plaques. The sample is exposed in a fluorescent sunlight/black light chamber until failure. Failure is taken as the hours required to reach 0.5 carbonyl absorbance by infrared spectroscopy on the exposed films.

| Additive | Hours to Failure |
|---|---|
| None | 100 |
| 0.2 % of compound of Example 1 | 350 |
| 0.2 % of compound of Example 3 | 260 |

These data thus indicate the effective stabilization activity of the instant compounds.

## Claims

1. A compound of the formula I 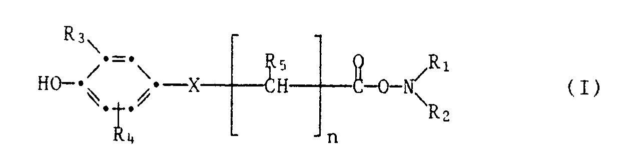 wherein n is an integer from 0 to 2, X is a direct bond, -S- or -CH₂S-, R₁ and R₂ independently are hydrogen, alkyl of 1 to 36 carbon atoms, cycloalkyl of 5 to 12 carbon atoms, allyl, aryl, aralkyl of 7 to 9 carbon atoms, said aralkyl substituted by alkyl of 1 to 36 carbon atoms, or R₁ and R₂ together with the nitrogen atom to which they are linked from a 5 - 7 membered heterocyclic ring, R₃ and R₄ independently are alkyl of 1 to 18 carbon atoms, cycloalkyl of 5 to 6 carbon atoms, phenyl, alkaryl of 7 to 18 carbon atoms or aralkyl of 7 to 9 carbon atoms, and R₅ is hydrogen or the group

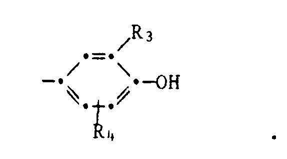

2. A compound according to claim 1, wherein R₁ and R₂ are independently hydrogen, straight-chain or branched alkyl of 1 to 18 carbon atoms, cyclopentyl, cyclohexyl, benzyl, alpha-methylbenzyl or alpha,alpha-dimethylbenzyl.

3. A compound according to claim 1, wherein R₁ and R₂ are the alkyl mixture found in hydrogenated tallow amine.

4. A compound according to claim 1, wherein R₁ and R₂ are benzyl.

5. A compound according to claim 1, wherein R₄ is positioned ortho to the hydroxyl group.

6. A compound according to claim 5, wherein R₃ and R₄ are tert-alkyl of 4 to 8 carbon atoms.

7. A compound according to claim 5, wherein R₃ and R₄ are tert-butyl.

8. A compound according to claim 1, wherein X is a direct bond.

9. A compound according to claim 1, wherein X is a -CH₂S-.

10. The compounds
0-(3,5-di-tert-butyl-4-hydroxybenzoyl)-N,N-dibenzylhydroxylamine,
O-[bis(3,5-di-tert-butyl-4-hydroxyphenyl)acetyl]-N,N-dibenzylhydroxylamine,
O-(3,5-di-tert-butyl-4-hydroxyhydrocinnamoyl)-N,N-dibenzylhydroxylamine,
O-[3-(3,5-di-tert-butyl-4-hydroxybenzylthio)propionyl]-N,N-dibenzylhydroxylamine and
O-(3,5-di-tert-butyl-4-hydroxybenzoyl)-N,N-diethylhydroxylamine according to claim 1.

11. O-Ester of HON[(CH₂)ₘCH₃]₂ where m is 15 - 17 with 3,5-di-tert-butyl-4-hydroxybenzoic acid according to claim 1.

12. A composition comprising an organic material subject to oxidative, thermal and actinic degradation and at least one compound according to claim 1.

13. A composition according to claim 12, wherein the organic material is a synthetic polymer.

14. A composition according to claim 12, wherein the organic material is a polyolefin homopolymer or copolymer.

15. A composition according to claim 12,which additionally contains a phenolic antioxidant.

16. Use of a compound according to claim 1 for stabilizing an organic material against oxidative, thermal and actinic degradation.

## Patentansprüche

1. Verbindung der Formel I 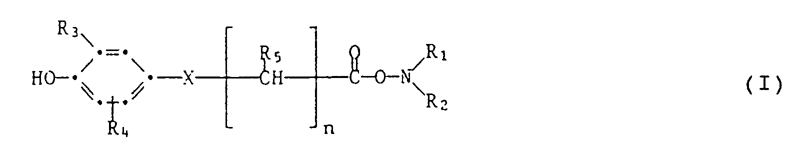 worin n eine ganze Zahl von 0 bis 2 bedeutet, X eine direkte Bindung, -S- oder -CH₂S- bedeutet, R₁ und R₂ unabhängig voneinander Wasserstoff, Alkyl mit 1 bis 36 Kohlenstoffatomen, Cycloalkyl mit 5 bis 12 Kohlenstoffatomen, Allyl, Aryl, Aralkyl mit 7 bis 9 Kohlenstoffatomen bedeutet, wobei Aralkyl mit Alkyl von 1 bis 36 Kohlenstoffatomen substituiert ist, oder R₁ und R₂ zusammengenommen mit dem Stickstoffatom, an dem sie gebunden sind, einen 5- bis 7-gliedrigen heterocyclischen Ring bilden, R₃ und R₄ unabhängig voneinander Alkyl mit 1 bis 18 Kohlenstoffatomen, Cycloalkyl mit 5 bis 6 Kohlenstoffatomen, Phenyl, Alkaryl mit 7 bis 18 Kohlenstoffatomen oder Aralkyl mit 7 bis 9 Kohlenstoffatomen bedeuten und R₅ Wasserstoff oder die Gruppe 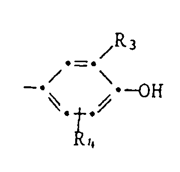 darstellt.

2. Verbindung nach Anspruch 1, wobei R₁ und R₂ unabhängig voneinander Wasserstoff, geradkettiges oder verzweigtes Alkyl mit 1 bis 18 Kohlenstoffatomen, Cyclopentyl, Cyclohexyl, Benzyl, α-Methylbenzyl oder α,α-Di-methylbenzyl bedeuten.

3. Verbindung nach Anspruch 1, wobei R₁ und R₂ das Alkylgemisch sind, das im hydrierten Talgamin gefunden wird.

4. Verbindung nach Anspruch 1, wobei R₁ und R₂ Benzyl sind.

5. Verbindung nach Anspruch 1, wobei R₄ sich in ortho-Stellung zu der Hydroxylgruppe befindet.

6. Verbindung nach Anspruch 5, wobei R₃ und R₄ tert-Alkyl mit 4 bis 8 Kohlenstoffatomen bedeuten.

7. Verbindung nach Anspruch 5, wobei R₃ und R₄ tert-Butyl bedeuten.

8. Verbindung nach Anspruch 1, wobei X eine direkte Bindung bedeutet.

9. Verbindung nach Anspruch 1, wobei X -CH₂S- bedeutet.

10. Die Verbindungen, nämlich
O-(3,5-Di-tert-butyl-4-hydroxybenzoyl) N,N-dibenzylhydroxylamin, O-[Bis(3,5-di-tert-butyl-4-hydroxyphenyl)acetyl]-N,N-dibenzylhydroxylamin, O-(3,5-Di-tert-butyl-4-hydroxyhydrocinnamoyl)-N,N-dibenzylhydroxylamin, O-[3-(3,5-Di-tert.-butyl-4-hydroxybenzylthio)propionyl]-N,N-dibenzylhydroxylamin und O-(3,5-Di-tert-butyl-4-hydroxybenzoyl)-N,N-diethylhydroxylamin gemäß Anspruch 1.

11. O-Ester von HON[(CH₂)ₘCH₃]₂, wobei m 15 - 17 ist, mit 3,5-Di-tert-butyl-4-hydroxybenzoesäure gemäß Anspruch 1.

12. Zusammensetzung, umfassend ein oxydativem, thermischem und strahlungsbedingtem Abbau unterliegendes organisches Material und mindestens eine Verbindung gemäß Anspruch 1.

13. Zusammensetzung nach Anspruch 12, wobei das organische Material ein synthetisches Polymer ist.

14. Zusammensetzung nach Anspruch 12, wobei das organische Material ein Polyolefinhomopolymer oder Copolymer ist.

15. Zusammensetzung nach Anspruch 12, wobei zusätzlich ein phenolisches Antioxidans enthalten ist.

16. Verwendung einer Verbindung nach Anspruch 1 zur Stabilisierung eines organischen Materials gegen oxidativen, thermischen und strahlungsbedingten Abbau.

## Revendications

1. Composé de formule I 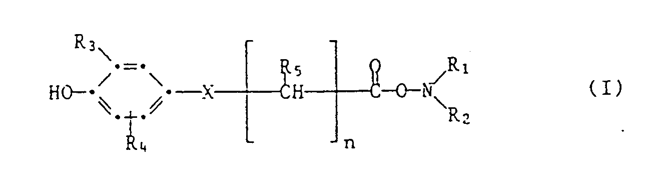 dans laquelle n est un entier de 0 à 2, X est une liaison directe, -S- ou -CH₂S-, R₁ et R₂ sont indépendamment hydrogène, alkyle de 1 à 36 atomes de carbone, cycloalkyle de 5 à 12 atomes de carbone, allyle, aryle, aralkyle de 7 à 9 atomes de carbone, ledit aralkyle substitué par alkyle de 1 à 36 atomes de carbone, ou R₁ et R₂ forment ensemble, avec l'atome d'azote auquel ils sont liés, un noyau hétérocyclique de 5 à 7 chaînons, R₃ et R₄ sont indépendamment alkyle de 1 à 18 atomes de carbone, cycloalkyle de 5 à 6 atomes de carbone, phényle, alkaryle de 7 à 18 atomes de carbone ou aralkyle de 7 à 9 atomes de carbone; et R₅ est l'hydrogène ou le groupe

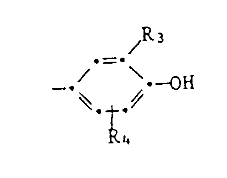

2. Composé selon la revendication 1, dans lequel R₁ et R₂ sont indépendamment hydrogène, alkyle linéaire ou ramifié de 1 à 18 atomes de carbone, cyclopentyle, cyclohexyle, benzyle, α-méthylbenzyle ou α,α-diméthylbenzyle.

3. Composé selon la revendication 1, dans lequel R₁ et R₂ sont le mélange d'alkyles se trouvant dans l'amine de suif hydrogéné.

4. Composé selon la revendication 1, dans lequel R₁ et R₂ sont benzyle.

5. Composé selon la revendication 1, dans lequel R₄ est en position ortho par rapport au groupe hydroxyle.

6. Composé selon la revendication 5, dans lequel R₃ et R₄ sont tert-alkyle de 4 à 8 atomes de carbone.

7. Composé selon la revendication 5, dans lequel R₃ et R₄ sont tert-butyle.

8. Composé selon la revendication 1, dans lequel X est une liaison directe.

9. Composé selon la revendication 1, dans lequel X est -CH₂S-.

10. Les composés
O-(3,5-di-tert-butyl-4-hydroxybenzoyl)-N,N-dibenzylhydroxylamine,
O-[bis(3,5-di-tert-butyl-4-hydroxyphényl)acétyl]-N,N-dibenzylhydroxylamine,
O-(3,5-di-tert-butyl-4-hydroxyhydrocinnamoyl)-N,N-dibenzylhydroxylamine,
O-[3-(3,5-di-tert-butyl-4-hydroxybenzylthio)propionyl]-N,N-dibenzylhydroxylamine et
O-(3,5-di-tert-butyl-4-hydroxybenzoyl)-N,N-diéthylhydroxylamine, selon la revendication 1.

11. O-ester de HON[(CH₂)ₘCH₃]₂, où m est égal à 15-17, de l'acide 3,5-di-tert-butyl-4-hydroxybenzoïque selon la revendication 1.

12. Composition comprenant une matière organique sensible à la dégradation oxydante, thermique et actinique, et au moins un composé selon la revendication 1.

13. Composition selon la revendication 12, dans laquelle la matière organique est un polymère synthétique.

14. Composition selon la revendication 12, dans laquelle la matière organique est un homopolymère ou un copolymère polyoléfinique.

15. Composition selon la revendication 12, qui contient en plus un antioxydant phénolique.

16. Utilisation d'un composé selon la revendication 1 pour la stabilisation d'une matière organique contre la dégradation oxydante, thermique et actinique.
